# EUROPÄISCHE PATENTSCHRIFT

(11) **EP 1 532 536 B1**
(45) Veröffentlichungstag und Bekanntmachung des Hinweises auf die Patenterteilung: **13.02.2008**
(21) Anmeldenummer: 03790751.6
(22) Anmeldetag: 26.08.2003
(51) Int. Cl.: G06F 13/42

(54) **VERFAHREN UND ANORDNUNG ZUM BETREIBEN VON PERIPHEREN EINHEITEN AN EINEM BUS**
METHOD AND ARRANGEMENT FOR OPERATING PERIPHERAL UNITS ON A BUS
PROCEDE ET DISPOSITIF POUR FAIRE FONCTIONNER DES UNITES PERIPHERIQUES AU MOYEN D'UN BUS

(30) Priorität: 30.08.2002 DE 10240086
(43) Veröffentlichungstag der Anmeldung: 25.05.2005
(73) Patentinhaber: Fujitsu Siemens Computers GmbH, 80807 München (DE)
(72) Erfinder: BEZ, Mario, 86159 Augsburg (DE); KARTHEININGER, Michael, 86199 Augsburg (DE); ANDERSSON, Gerald, 86556 Kühbach (DE)
(74) Vertreter: Epping - Hermann - Fischer
(86) Internationale Anmeldenummer: PCT/DE2003/002847
(87) Internationale Veröffentlichungsnummer: WO 2004/021198

(56) Entgegenhaltungen:
- WO-A-96/30819
- US-A- 5 598 580
- US-A- 5 784 599

## Beschreibung

Die Erfindung betrifft ein Verfahren zum Betreiben von peripheren Einheiten an einem BUS gemäß der Patentansprüche 1 und 2.

In Personalcomputern und ähnlichen Computersystemen z.Bsp: Server wird in der Regel ein Systemboard bzw. sogenanntes "Motherboard" verwendet, auf dem der/die Mikroprozessor(en), auch "CPU" genannt, samt Arbeitsspeicher, "RAM" genannt, Festwertspeicher, "ROM" genannt, peripheren Einheiten und weitere wichtige Computerkomponenten untergebracht ist. Die CPU ist im allgemeinen mit den peripheren Einheiten (I/O Subsystem) auf dem Systemboard also beispielsweise mit den Ein-/Ausgabe-Controllern usw. mit einem bidirektionalen BUS verbunden, der über Daten, Adreß-, Steuer- und Versorgungsleitung verfügt. Als BUS-System wird beispielsweise weitverbreitet der PCI (periphery component interconnect) BUS verwendet. An dem BUS sind im allgemeinen mehrere parallel zueinander sich erstreckende BUS-Steckplätze des Systemboards vorgesehen, in die die Erweiterungskarten zur funktionellen Erweiterung des Computersystems eingesteckt werden können. Die Anzahl der Erweiterungskarten und der zugehörigen Funktion steigt zunehmend an. Der PCI-BUS wird standardgemäß mit einer Taktfrequenz von bis zu 66 Megaherz betrieben und kann auf Grund einer Daten-BUS-Breite von 32 oder 64 Bit bis zu 132 bzw 266 MB pro Sekunde übertragen. In der Zwischenzeit haben sich Bestrebungen durchgesetzt, die Erweiterungskarten mit einer höheren Taktrate zu betreiben. Entsprechend wurde der PCI-X-BUS entwickelt und spezifiziert, der momentan mit einer Taktfrequenz von bis zu 133 (66, 100 oder 133)Megaherz arbeitet und entsprechende Datentransferraten von bis zu 1 GB pro Sekunde ermöglicht. Die maximal mögliche Bustaktfrequenz hängt vor allem von der Anzahl der angeschlossenen Bus-Teilnehmer und der Länge und Anordnung der elektrischen Verbindungen der Teilnehmer untereinander ab. Die maximal mögliche Busfrequenz (entspricht dem maximal möglichen Datendurchsatz), die einen fehlerfreien Datenaustausch noch sicherstellt, ist tendenziell umso niedriger, je länger der Bus ist und je mehr Busteilnehmer angeschlossen sind Da der PCI/PCI-X-BUS also nur mit einer eingeschränkten Anzahl von Ergänzungskarten mit der hohen Taktfrequenz betreibbar ist, ist man, um hohe Datendurchsätze zu realisieren, zwischenzeitlich dazu übergegangen, in einem PC bzw. Server, je nach Ausbaufähigkeit, mehrere PCI/PCI-X-BUS-Anordnungen, auch Bus-Segmente genannt, nebeneinander zu betreiben. Dies bedeutet, es werden mehrere PCI-X-BUS-Segmente und/oder ein oder mehrere Standard PCI-BUS-Segmente eingerichtet. Zur Verbindung eines PCI/PCI-X-BUSses mit dem CPU Bus (Host Bus) wird üblicherweise eine als "(Host to)PCI/PCI-X Bridge" genannte BUS-Steuerung eingesetzt, die den PCI-BUS mit den sogenannten "host-BUS" verbinden, an dem die CPU angeschlossen ist. Die " PCI/PCI-X Bridges sind bei derartigen Systemen also mehrfach vorhanden, nämlich für jedes PCI-BUS-Segment einmal. In der Praxis werden manchmal zwei logische bridges in einem physikalischen Chip zusammengefasst. Diese "bridges" sind teuere Komponenten und erhöhen die Herstellungskosten derartiger Computersysteme.

Aus der US-A-5 784 599 ist eine Verfahren sowie eine Busanordnung bekannt, bei dem die maximale gemeinsame Taktfrequenz für alle installierten CPU-Karten, die an einem HOST-Bus angeschlossen sind, ermittelt wird und der HOST-Bus mit einer niedrigeren, der maximalen gemeinsamen Taktfrequenz entsprechenden Frequenz, betrieben wird.

Ein ähnliches Verfahren sowie eine ähnliche Anordnung ist aus der WO 96/30819 A bekannt, wobei ebenso die maximale gemeinsame Taktfrequenz ermittelt und der BUS mit dieser Taktfrequenz betrieben wird.

Der Erfindung liegt somit die Aufgabe zu Grunde, ein Verfahren zum Betreiben peripherer Einrichtungen an einen BUS bzw. eine entsprechende Anordnung vorzusehen, bei dem mit einfachen Mitteln eine hohe Flexibilität bezüglich Art und Anzahl der zusteckbaren peripheren Einrichtungen gewährleistet ist und gleichzeitig der jeweils maximal mögliche Datendurchsatz erreicht wird. Diese Aufgabe wird erfindungsgemäß durch die in den Patentansprüchen 1 und 3 angegebenen Maßnahmen bzw. Mitteln gelöst. Dadurch, daß die aktuelle Konfiguration automatisch festgestellt wird, d.h. wie viele periphere Einrichtungen momentan am jeweiligen BUS Segment angeschlossen sind, kann die damit jeweils optimale, maximal mögliche BUS-Taktfrequenz ermittelt werden. Ein gering ausgebautes Bussegment kann somit mit 133 MHz Bustakt betrieben werden, größere- bzw. Voll-Ausbauten werden, soweit dies nötig ist, automatisch heruntergetaktet (100 bzw. 66 MHz), um einen sicheren Datenaustausch auf dem Bus zu gewärleisten.
Im Gegensatz dazu wurde bisher diejenige maximal mögliche Taktfrequenz fest eingestellt, die bei "Worst Case Configuration" (i.a. der Vollausbau)noch sichere Funktion garantiert. In der Praxis wird jedoch größtenteils nur ein teilweiser Ausbau des I/O Subsystems benötigt. Ein teilweise ausgebautes Bussegment konnte jedoch die nun theoretisch mögliche, höhere Bustaktfrequenz nicht nutzen, da die Frequenz an den Worst Case angepasst und fest eingestellt war.
Um die Frequenzvielfalt in Grenzen zu halten wurden in der heutigen Spezifikation drei mögliche Taktfrequenzen für PCI-X Busse definiert, nämlich 66, 100 und 133 MHz. Jeder Busteilnehmer muß kompatibel zu den niedrigeren Frequenzen funktionieren und im Notfall sogar den Standard PCI 33MHz Mode unterstützen. Der gesamte Bus darf und kann natürlich nur maximal in dem Mode laufen, den der langsamste Teilnehmer auf dem Bus unterstützt. Das bedeutet wiederum, dass obige Frequenzoptimierung nur dann vollzogen werden kann, wenn auch der langsamste Teilnehmer auf dem Bus-Segment diese Frequenz unterstützt. Die Detektion der Fähigkeiten der Steckkarten selbst erfolgt ebenfalls automatisch und begrenzt im Falle des Falles die Busfrequenz.

Es gibt also zwei die Taktfrequenz beschränkende Komponenten. Zum einen das System Design mit der jeweiligen Anzahl der Busteilnehmer, zum anderen jeder einzelne Busteilnehmer für sich selbst durch die max. Frequenz, die er selbst eben unterstützt. Für die Busteilnehmer sind zwei PCI-X-Frequenzklassen spezifiziert, 133MHz und 66 MHz. Der 100 MHz Betrieb wurde als Zwischenschritt eingerichtet um eine vom Systemdesign bedingte Heruntertaktung von 133 MHz nicht gleich auf 66 MHz reduzieren zu müssen. Um 100 oder 133 MHz realisieren zu können, müssen also alle Busteilnehmer den sogenannten 133MHz PCI-X Mode unterstützen.

Die maximale Taktfrequenz wird also bestimmt aus der höchsten unterstützten Frequenz des "langsamsten" Bus-Teilnehmers (dies ist eine Anforderung der PCI-X Spezifikation), und der höchstmöglichen Frequenz des BUS-Segmentes, abhängig von der momentanen Ausbaustufe (dies ist Teil der Erfindung). Bei entsprechendem Bus Design werden alle erdenklichen Ausbauten optimal unterstützt.

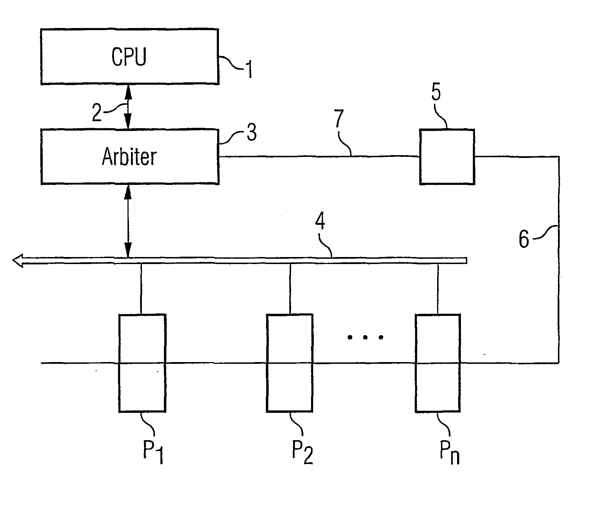

Nachfolgend wird die Erfindung unter Bezugnahme auf die Zeichnung erläutert.

In der Figur ist ein Ausführungsbeispiel für eine erfindungemäße BUS-Anordnung prinzipiell dargestellt.

In der Figur ist eine CPU 1 über einen sogenannten "host-BUS" 2 mit einer Brücke 3 einem BUS 4 verbunden, der beispielsweise ein "PCI-X-BUS" ist. An diesem BUS 4 sind mittels nicht dargestellter "Steckplätze" periphere Einheiten P1 bis PN angeschlossen. Eine Ermittlungseinheit 5 bestimmt über eine entsprechende Verbindung 6 nunmehr, wie viele periphere Einheiten mit dem BUS 4 angeschlossen sind. Das heißt, es wird ermittelt, wie viele der sogenannten "Steckplätze" belegt sind. Aus der ermittelten Anzahl bestimmt die Einrichtung 5 eine optimale BUS-Taktfrequenz und teilt diese über einen Anschluß 7 der Brücke 3 mit. Somit ist es möglich, daß die Brücke 3 den BUS 4 mit der optimalen BUS-Taktfrequenz betreibt. Zusätzlich gibt es in jedem PCI I/O-SubSystem, das systembedingt mehr als 33MHz unterstützen kann, eine Logik die quasi entsprechend Einheit 5 die max. mögliche Taktfrequenz der einzelnen Karten ermittelt (Anforderung der PCI/PCI-X Spezifikation, siehe oben). Diese maximale gemeinsame Taktfrequenz ist die niedrigste Taktfrequenz der jeweils maximalen Taktfrequenz des einzelnen Busteilnehmers.

Bei allen Systemen, in denen die Erfindung zum Einsatz kommt, ist es zweckmäßig alle auf die Bustaktfrequenz Einfluß nehmenden Parameter in einer gemeinsamen Logik zu verarbeiten, hier die Einheit 5. Somit ist es möglich, daß die Einheit 5 () die optimale BUS-Taktfrequenz ermittelt und diesen Wert, entsprechend der Signalisierung aufbereitet, als tatsächlich einzustellende optimale BUS-Taktfrequenz der Brücke 3 mitteilt.

Neben dieser hardwaretechnischen Lösung, die unter Bezugnahme auf die Figur erläutert wurde ist auch eine softwarebasierte Lösung denkbar. Über das sogenannte "BIOS" ist sowohl die Anzahl der peripheren Einrichtungen als auch deren Eigenschaften ermittelbar. Somit ist es möglich, daß aus den mittels "BIOS" ermittelbaren Daten von der CPU die Brücke 3 mit einer entsprechenden Information versorgt wird (?), so daß die Brücke 3 sowohl gemäß der Anzahl der peripheren Einheiten als auch der maximalen gemeinsamen Taktfrequenz, die tatsächliche optimale BUS-Taktfrequenz ermitteln kann und den BUS entsprechend steuert.

Es ist entsprechend der gegenwärtigen technischen Realisierbarkeit folgende Konfiguration beispielsweise möglich. Der BUS 4 ist ein PCI-X-BUS, der bei einem bestückten Steckplatz mit einer BUS-Taktfrequenz von 133 Megaherz, bei zwei bestückten Steckplätzen mit 100 Megaherz bei drei bestückten Steckplätzen auch mit 100 Megaherz und bei vier bestückten Steckplätzen mit 66 Megaherz als optimaler Taktfrequenz betrieben werden kann, vorausgesetzt dass die Karten jeweils mindestens diese Frequenz unterstützen.

Normale Systeme müssen nun entsprechend dem Worst Case (4 Karten gesteckt) 66 MHz fest einstellen. Selbst wenn nur eine Karte steckt kann diese dann nur mit 66 MHz betrieben werden. Das System bietet also ausschließlich 66 MHz Steckplätze. Um dieses Problem zu umgehen realisiert man nun z. Bsp.: zwei PCI-X Segmente mit beispielsweise einmal einem Steckplatz und einmal drei Steckplätzen. Auf diese Weise beitet das System die gleiche Ausbaubarkeit, nämlich 4 Steckkarten, und kann ebenso zumindest einen Steckplatz mit 133MHz unterstützten. Dazu ist aber der Einsatz einer zweiten teuren PCI-X Bridge notwendig.
Die Lösung die die Erfindung beschreibt bringt also folgende Vorteile mit sich.
Es ist der aufwendige Aufbau zweier BUS-Anordnungen auf diese Art und Weise vermieden und der Einsatz einer zweiten teueren Brücke nicht notwendig. Mit der beschriebenen Anordnung bzw. dem beschriebenen Verfahren ist stets gewährleistet, daß egal ob Karten für das konventionelle PCI-System oder für das PCI-X-System verwendet werden, stets die geeignete BUS-Taktfrequenz eingestellt wird, die für einen sicheren Betrieb notwendig ist. Werden zu viele schnelle Karten eingesetzt, die gemeinsam nicht mit der hohen Taktfrequenz gemäß dem PCI-X-Standard betreibbar sind, so wird eine geeignete niedrigere Taktfrequenz eingestellt. Bei größer ausbaubaren Systemen sind durchaus bis zu 16 Steckplätze gebräuchlich. Es sind dann sehr viele Konfigurationen denkbar. Durch die Erfindung kann im Allgemeinen die Anzahl der PCI Bussegmente halbiert werden und gleichzeitig eine vergleichbare Flexibilität und Maximalperformance

Das unter Bezugnahme auf den PCI-BUS bzw. PCI-X-BUS beschriebene System ist vom Grundprinzip auch auf andere BUS-Systeme übertragbar und nicht an das PCI-System gebunden. Aber auch für den heutigen PCI-X Bus sind bereits Weiterentwicklungen geplant die wiederum mit höheren Datenübertragungsraten arbeiten werden.

## Patentansprüche

1. Verfahren zum Betreiben von peripheren Einheiten an einem BUS, bei dem von einer Feststellogik die Anzahl der peripheren Einheiten ermittelt wird,
eine der ermittelten Anzahl der peripheren Einheiten entsprechende optimale Taktfrequenz zusammen mit der Kenntnis der auf dem System Motherboard realisierten Bus-Topologie bestimmt wird und
der BUS mit der optimalen Taktfrequenz betrieben wird.

2. BUS-Anordnung mit einem BUS (4), der über eine BUS-Steuerung (3) gesteuert wird, und an dem mehrere periphere Einheiten (P1, ..., Pn) angeschlossen sind,
**dadurch gekennzeichnet, daß**
eine Feststellogik (5) die Anzahl der mit dem BUS (4) verbundenen peripheren Einheiten ermittelt, zusammen mit der Kenntnis der auf dem System Motherboard realisierten Bus-Topologie eine optimale BUS-Taktfrequenz für die ermittelte Anzahl bestimmt und diese an die BUS-Steuerung (3) weiterleitet, um den BUS mit der optimalen Taktfrequenz zu betreiben.

## Claims

1. Method for operating peripheral units on a bus, in which the number of peripheral units is ascertained by a determination logic unit, an optimal clock frequency, which corresponds to the number of peripheral units ascertained, is determined together with the knowledge of the bus topology realized on the system motherboard, and the bus is operated at the optimal clock frequency.

2. Bus arrangement having a bus (4), which is controlled by means of a bus controller (3) and to which a plurality of peripheral units (P1, ..., Pn) are connected,
**characterized in that**
a determination logic unit (5) ascertains the number of peripheral units which are connected to the bus (4), determines, together with the knowledge of the bus topology realized on the system motherboard, an optimal bus clock frequency for the number ascertained and forwards said clock frequency to the bus controller (3), in order to operate the bus at the optimal clock frequency.

## Revendications

1. Procédé destiné à l'exploitation d'unités périphériques connectées à un bus, où le nombre d'unités périphériques est établi par une logique de détermination,
une fréquence d'horloge optimale correspondant au nombre établi d'unités périphériques est déterminée, conjointement avec la connaissance de la topologie de bus réalisée sur la carte mère du système, et
le bus fonctionne avec la fréquence d'horloge optimale.

2. Configuration de bus avec un bus (4) qui est commandé via une commande de bus (3), et auquel sont raccordées plusieurs unités périphériques (P1, ..., Pn),
**caractérisé en ce que**
une logique de détermination (5) établit le nombre d'unités périphériques connectées au bus (4), conjointement avec la connaissance de la topologie de bus réalisée sur la carte mère du système, détermine une fréquence d'horloge de bus optimale pour le nombre établi et transmet celle-ci à la commande de bus (3), pour exploiter le bus avec la fréquence d'horloge optimale.
